Europäisches Patentamt

European Patent Office

Office européen des brevets

(11) Numéro de publication: **0 239 431**
**A1**

## (12) DEMANDE DE BREVET EUROPEEN

(21) Numéro de dépôt: 87400350.2

(22) Date de dépôt: 18.02.87

(51) Int. Cl.⁴: **F 16 D 69/04**
F 16 D 65/12, F 16 D 55/14

(30) Priorité: 26.02.86 FR 8602641

(43) Date de publication de la demande:
30.09.87 Bulletin 87/40

(84) Etats contractants désignés:
CH DE ES FR IT LI SE

(71) Demandeur: **VALEO**
**64 Avenue de la Grande Armée**
**F-75017 Paris (FR)**

(72) Inventeur: **Jumel, Bernard**
**13 rue Nungesser et Coli**
**F-93380 Pierrefitte (FR)**

(74) Mandataire: **CABINET BONNET-THIRION**
**95 Boulevard Beaumarchais**
**F-75003 Paris (FR)**

(54) Frein à disque à piste de frottement en couronne.

(57) Frein à disque à élément de friction à haute performance, par exemple du type carbone-carbone.

Selon l'invention, l'élément de friction (34) est logé dans une creusure (33) d'un support massif (20) de préférence métallique et la reprise du couple de freinage est assurée par des indentations ou crénelures (40, 41) pratiquées le long de l'élément de friction d'une part, et de la creusure d'autre part.

FIG.2

EP 0 239 431 A1

## Description

"Frein à disque à piste de frottement en couronne"

L'invention se rapporte à un frein à disque à piste de frottement en couronne, du type comportant au moins un élément de friction annulaire plat fixé à un support massif, typiquement en acier. Elle concerne plus particulièrement la reprise du couple de freinage dans un tel type de montage.

L'invention permet d'éviter que le disque de freinage soit entièrement constitué de matériau de friction et s'applique avantageusement chaque fois que ledit matériau de friction est relativement coûteux, par exemple lorsque sa texture est du type carbone-carbone.

L'emploi de garnitures de friction en carbone-carbone (c'est-à-dire comportant des fibres de carbone noyées dans un liant de carbone) permet d'obtenir d'excellentes performances de freinage pour une usure moindre. Cependant le prix de ce matériau est encore relativement élevé. Un disque de freinage constitué d'un support massif sur lequel sont montés un ou plusieurs éléments de friction relativement plats permet donc de réduire la quantité de matériau de friction utilisé et par conséquent le prix de revient du frein correspondant. Dans le cas particulier où l'élément de friction est unique et de forme annulaire, se pose le problème de la reprise du couple de freinage entre ledit élément de friction et son support. On pourrait envisager de fixer l'élément de friction annulaire et plat avec des moyens classiques tels que des vis ou rivets, mais cela aboutirait à augmenter considérablement l'épaisseur de l'élément de friction, en raison des dimensions des moyens de fixation nécessaires pour assurer la reprise de couple. L'invention permet de résoudre ce problème.

Dans cet esprit, l'invention concerne essentiellement un frein à disque à piste de frottement en couronne, du type comportant au moins un élément de friction fixé à un support massif, par exemple métallique, caractérisé en ce que, ledit élément de friction étant annulaire et plat, au moins un bord de cet élément de friction comporte une pluralité d'indentations ou crénelures, en ce que ledit support massif comporte une creusure dans laquelle ledit élément de friction est en partie encastré et en ce que le bord de ladite creusure correspondant au bord précité dudit élément de friction comporte des indentations ou crénelures en contact par leurs flancs avec celles dudit élément de friction, pour assurer la transmission du couple de freinage entre ledit élément de friction et ledit support massif.

Comme mentionné précédemment, ledit support massif sera le plus souvent en acier tandis que l'élément de friction annulaire plat sera en carbone et notamment avec une texture du type carbone-carbonne.

Il est à noter cependant que l'invention s'applique avantageusement à tout frein du type mentionné ci-dessus incorporant un matériau de friction onéreux et/ou difficile à coller sur un support, comme par exemple certains matériaux de friction connus à base de céramique.

L'invention sera mieux comprise et d'autres avantages de celle-ci apparaîtront plus clairement à la lumière de la description qui va suivre d'une frein conforme à son principe, donnée uniquement à titre d'exemple, et faite en référence aux dessins annexés dans lesquels:
- la figure 1 est une vue partielle en coupe radiale d'un frein conforme à l'invention; et
- la figure 2 est une vue partielle en plan d'un disque de freinage vu selon la ligne II-II de la figure 1.

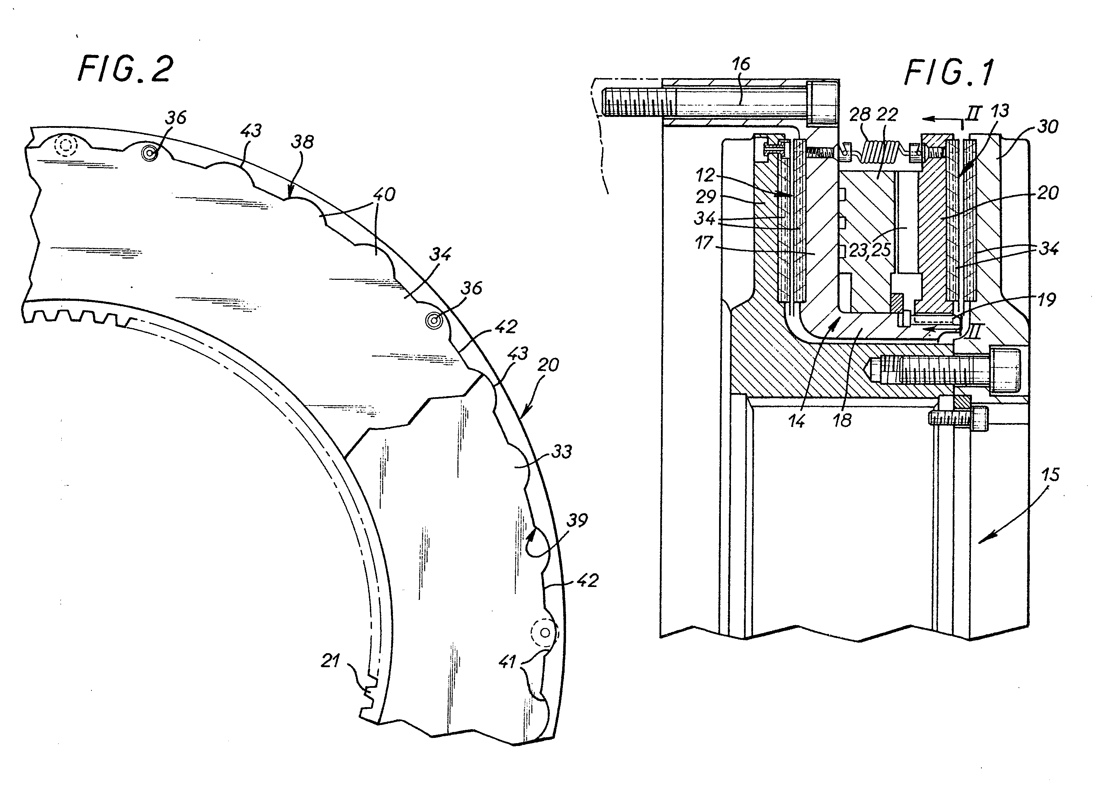

En se reportant aux dessins, on a représenté un frein, notamment pour véhicule lourd, comportant deux paires 12, 13 de disques à piste de frottement en couronne. Pour chaque paire, l'un des disques fait partie d'un équipage 14 solidaire du châssis du véhicule tandis que l'autre fait partie d'un moyeu 15 solidaire de la roue (non représentée). Le moyeu est monté flottant axialement. L'équipage 14, fixé au châssis par des vis 16, comporte un plateau annulaire fixe 17, en acier, prolongé axialement par une partie cylindrique 18 à l'extrémité de laquelle sont définies des dentures longitudinales 19. Un plateau annulaire mobile 20, muni de dentures analogues 21 en prise avec les dentures 19, est susceptible de coulisser axialement par rapport à la partie cylindrique 18. Un disque d'actionnement 22 est intercalé entre les plateaux 17 et 20. Il est muni de rampes 23 coopérant avec d'autres rampes 25 du plateau mobile 20. Ainsi, l'entraînement en rotation du disque d'actionnement 22, par l'intermédiaire d'un vérin de commande non visible sur le dessin, provoque un écartement des plateaux 17 et 20. Des ressorts de rappel 28 travaillant en traction sont montés entre les plateaux 17 et 20 pour les solliciter vers leur position d'écartement minimum. Par ailleurs, le moyeu 15 comporte deux plateaux annulaires parallèles 29, 30 faisant respectivement face aux plateaux 17 et 20. L'équipage 14 est essentiellement logé dans l'espace défini entre les plateaux 29 et 30. Les plateaux 17, 29 d'une part et 20, 30 d'autre part, constituent les supports massifs des disques de freinage des paires de disques 12, 13 définies ci-dessus. Chaque support comporte ainsi une creusure 33 (figure 2) dans laquelle un élément de friction 34 annulaire et plat, est en partie encastré.

Dans l'exemple, cet élément de friction est en carbone-carbone. Ce matériau étant très difficile à coller à un support, chaque élément de friction 34 est fixé à son support par des rivets 36 prenant appui sur des épaulements définis dans l'épaisseur dudit élément de friction, de façon à ne pas être endommagés au fur et à mesure de l'usure de ce dernier. Ces rivets ne sont cependant pas dimensionnés pour assurer la transmission du couple de freinage entre l'élément de friction et son support (ce qui aboutirait à augmenter considérablement l'épaisseur de l'élément de friction pour pouvoir y loger des rivets plus volumineux). C'est pourquoi, selon l'invention, le bord externe 38, au moins, de chaque élément de friction 34 comporte une pluralité d'indentations ou crénelures 40 tandis que le bord de la creusure 33 correspondant au bord 38, de l'élément de friction (c'est-à-dire ici son bord externe 39) comporte des indentations ou crénelures 41 en contact par leurs flancs avec celles de l'élément de friction. Cet agencement immobilise l'élément de friction à l'intérieur de la creusure et assure ainsi une bonne transmission du couple de freinage entre l'élément de friction et son support massif.

Bien entendu, de telles indentations ou crénelures pourraient être prévues le long des deux bords de l'élément de friction et de la creusure correspondante. De préférence et comme représenté, la forme de la creusure 33 est sensiblement celle de l'empreinte de l'élément de friction 34, de façon à réaliser un contact sensiblement continu entre le bord 38 de l'élément de friction et le bord 39 correspondant de la creusure. Pour faciliter l'usinage de la creusure, les bords 38 et 39 de l'élément de friction et de ladite creusure sont constitués chacun par la combinaison de tronçons 42 d'un cercle de grand diamètre et d'arcs de cercle 43, de petit diamètre, régulièrement espacés le long du cercle de grand diamètre 42. Dans l'exemple représenté, on a ainsi prévu trente six arcs de cercle de petit diamètre.

## Revendications

1- Frein à disque à piste de frottement en couronne, du type comportant un élément de friction (34) fixé à un support massif (20) par exemple métallique, caractérisé en ce que ledit élément de friction étant annulaire et plat, au moins un bord (38) de cet élément de friction comporte une pluralité d'indentations ou crénelures (40), en ce que ledit support massif comporte une creusure (33) dans laquelle ledit élément de friction est en partie encastré et en ce que le bord (39) de ladite creusure correspondant au bord précité dudit élément de friction comporte des indentations ou crénelures en contact par leurs flancs avec celles dudit élément de friction (34), pour assurer la transmission du couple de freinage entre ledit élément de friction et ledit support massif.

2- Frein à disque selon la revendication 1, caractérisé en ce que la forme de ladite creusure (33) est sensiblement celle de l'empreinte dudit élément de friction (34) pour réaliser un contact sensiblement continue entre le bord précité dudit élément de friction et le bord correspondant de ladite creusure.

3- Frein à disque selon la revendication 2, caractérisé en ce que les bords respectifs dudit élément de friction et de ladite creusure sont constitués, chacun, par la combinaison de tronçons d'un cercle (42) de grand diamètre et d'arcs de cercle (43) de petit diamètre, régulièrement espacés le long du cercle de grand diamètre.

4- Frein à disque selon l'une des revendications précédentes, caractérisé en ce que l'élément de friction est en carbone avec de préférence une texture du type carbone-carbone.

5- Frein à disque selon l'une des revendications précédentes, caractérisé en ce que le bord de l'élément de friction précité et le bord correspondant de la creusure sont leurs bords externes respectifs.

FIG.2

FIG.1

0239431

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 854 471 (DEMAG-ZUG GmbH)<br>* En entier; figure unique *<br><br>--- | 1 | F 16 D  69/04<br>F 16 D  65/12<br>F 16 D  55/14 |
| A | GB-A-1 338 927 (HEINEMANN)<br>* Figures 1,2 *<br><br>--- | 1 | |
| A | GB-A-2 116 651 (MITSUBISHI DENKI KABUSHIKI KAISHA)<br>* Page 1, lignes 30-31; figure 1 *<br><br>--- | 1 | |
| A | FR-A-2 311 224 (DUNLOP LTD)<br>* En entier; figures 1-8 *<br><br>--- | 1 | |
| A | GB-A-1 277 185 (DORER)<br>* En entier; figures 1,2 *<br><br>--- | 1 | DOMAINES TECHNIQUES RECHERCHES (Int. Cl.4) |
| A | FR-A-2 356 840 (AUTOMOTIVE PRODUCTS LTD)<br>* Page 3, lignes 12-17; figure 1 *<br><br>--- | 1 | F 16 D  69/00<br>F 16 D  65/00<br>F 16 D  55/00<br>F 16 D  13/00 |
| A | FR-A- 647 644 (KIRCHBACH'SCHE WERKE KIRCHBACH & CO.)<br>* En entier; figures 1-3 *<br><br>--- | 1 | |
| A | DE-A-2 358 140 (BUDERUS'SCHE EISENWERKE)<br>* En entier; figures 1-13 *<br><br>---        -/- | 1 | |

Le présent rapport de recherche a été établi pour toutes les revendications

| Lieu de la recherche | Date d'achèvement de la recherche | Examinateur |
|---|---|---|
| LA HAYE | 05-06-1987 | BRAEMS C.G.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

| Catégorie | Citation du document avec indication, en cas de besoin. des parties pertinentes | Revendication concernée | CLASSEMENT DE LA DEMANDE (Int. Cl.4) |
|---|---|---|---|
| **DOCUMENTS CONSIDERES COMME PERTINENTS** | | | Page   2 |
| A | FR-A-2 378 211 (MESSIER-HISPANO) * Page 3, lignes 26-39; figure  1 * | 1 | |
| | --- | | |
| A | FR-A-2 100 193  (DAIMLER-BENZ AG) * En entier; figures 1-4 * | 1 | |
| | ----- | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 05-06-1987 | BRAEMS C.G.I. |